# DEMANDE DE BREVET EUROPEEN

(11) **EP 1 167 158 A1**
(43) Date de publication de la demande: **02.01.2002**
(21) Numéro de dépôt: 01420141.2
(22) Date de dépôt: 19.06.2001
(51) Int. Cl.: B62D 5/04

(54) **Direction assistée électrique pour véhicule automobile**

(30) Priorité: 23.06.2000 FR 0008102
(71) Demandeur: Société de Mécanique d'Irigny, 69540 Irigny (FR)
(72) Inventeur: Rousseau, Bertrand M, 69100 Villeurbanne (FR)
(74) Mandataire: Bratel, Gérard

(57) **Abrégé**

La direction assistée comporte un moteur électrique d'assistance (8), qui applique un couple ou une force sur la colonne de direction (7), le pignon (6) ou la crémaillère (5). Un dispositif électronique (10) contrôle l'intensité maximale du courant électrique (1a) parcourant le moteur (8), en fonction de la valeur de l'angle de rotation (A) du volant (14), ou grandeur équivalente, fournie par un capteur (11). Cette intensité est réduite ou limitée lorsque la direction parvient en butée de braquage, pour limiter alors l'échauffement du moteur électrique d'assistance (8). Plus particulièrement, le dispositif de contrôle (10) fait diminuer l'intensité maximale selon une courbe programmée, en fonction de l'angle de rotation (A) du volant (14), et en tenant compte aussi de la dérivée de cet angle par rapport au temps.

## Description

La présente invention concerne, de façon générale, les systèmes de direction à assistance électrique, pour véhicules automobiles. Elle se rapporte, plus particulièrement, à un dispositif limitant l'échauffement du moteur électrique d'une telle direction assistée, lorsque celle-ci parvient en butée de braquage, à gauche ou à droite.

Une direction assistée électrique de véhicule automobile possède un moteur électrique, qui applique un couple ou une force sur la colonne de direction, sur le pignon ou sur la crémaillère. Lorsque l'assistance est sollicitée, un courant électrique d'intensité plus ou moins importante parcourt les enroulements du moteur électrique de la direction assistée, aussi désigné comme moteur électrique d'assistance.

Dans certaines circonstances de conduite ou de manoeuvre d'un véhicule automobile, la direction est maintenue en butée de braquage durant un certain temps. Si le véhicule est équipé d'une direction assistée électrique, un courant électrique d'intensité élevée parcourt alors le moteur de cette direction assistée, pendant un temps plus ou moins long, et il en résulte un échauffement important et non souhaitable du moteur électrique d'assistance, pouvant aller jusqu'à sa destruction.

Pour éviter un tel risque, on connaît déjà un système qui mesure ou calcule la température du moteur électrique de la direction assistée, et qui, en cas de détermination d'une température de ce moteur jugée trop élevée, commande impérativement une réduction de l'intensité du courant électrique alimentant le moteur, sans tenir compte de l'angle réel de braquage ; la réduction d'intensité étant maintenue durant un certain temps (par exemple 10 minutes), jusqu'à ce que le moteur électrique d'assistance soit suffisamment refroidi pour être de nouveau alimenté normalement.

Ainsi, durant tout le temps où le moteur électrique de la direction assistée est alimenté par un courant d'intensité réduite, le conducteur du véhicule concerné ne bénéficie que d'une faible assistance, ou même d'aucune assistance, de sorte que la direction reste « dure » pendant une durée prolongée.

De plus, le système précédemment évoqué n'agit pas préventivement sur la cause de l'échauffement du moteur électrique de la direction assistée, et il cherche seulement à éviter les conséquences d'un échauffement excessif, après que cet échauffement se soit déjà produit et ait pu être détecté. Une telle approche du problème n'est guère satisfaisante.

Par le brevet US 5086859, on connaît aussi un système de limitation du courant dans le moteur électrique d'une direction assistée électrique, à l'approche de la butée de braquage, en vue d'éviter l'échauffement de composants électriques, et en particulier pour éviter un échauffement excessif du moteur électrique d'assistance. Le système fonctionne en exploitant le signal fourni par un capteur d'angle du volant. Toutefois, ce document ne fournit aucune indication sur la loi de variation de l'intensité maximale du courant dans le moteur électrique d'assistance. En l'absence de progressivité dans la limitation du courant, la solution du brevet US 5086859 se traduit, à l'approche de la butée de braquage, par un "phénomène de mur", c'est-à-dire par un durcissement brutal de la direction, pour le conducteur du véhicule, en particulier si le volant est tourné avec une grande vitesse de rotation. Ce phénomène peut aller jusqu'à rendre inutilisable, ou du moins difficilement exploitable, le rayon de braquage maximum du véhicule concerné.

Le brevet US 4785901 vise, lui aussi, à remédier à l'échauffement du moteur électrique d'assistance, dans une direction assistée électrique, par une atténuation du courant dans ce moteur, à l'approche de la butée du braquage, détectée par un capteur associé à la crémaillère de la direction. Plus particulièrement, ce document prévoit une loi de décroissance de l'intensité maximale du courant dans le moteur électrique d'assistance. Cependant, la décroissance de l'intensité maximale du courant s'effectue ici uniquement en fonction du temps, avec intervention d'un circuit à constante de temps ; cette décroissance n'est donc pas directement liée à la valeur instantanée de l'angle du volant. Ainsi, la solution du brevet US 4785901 conserve elle aussi des imperfections. En particulier, lorsque le volant est tourné à faible vitesse, à l'approche de la butée de braquage, toute assistance de la direction est perdue après un certain temps, avant même d'arriver en butée de braquage, ce qui n'est évidemment pas souhaitable. De plus, en cas de changement du sens de rotation du volant, à l'approche de la butée de braquage, le système continuera de faire diminuer l'intensité du courant, puisqu'il est dépendant du temps.

La présente invention vise à éviter les inconvénients précédemment exposés, en fournissant une solution autre, évitant efficacement l'échauffement du moteur électrique d'une direction assistée du genre considéré, quand cette direction parvient en butée de braquage, sans que l'assistance soit excessivement réduite ou supprimée, de manière à éviter des incidences trop fortes sur la conduite du véhicule. En particulier, cette invention vise à fournir un système assurant un "dosage" optimal de la limitation de l'intensité maximale du courant dans le moteur électrique d'assistance, indépendamment de la vitesse de rotation du volant et notamment sans perturbation en cas de rotation très rapide ou très lente du volant, et avec retour rapide à une assistance maximale en cas d'inversion du sens de rotation du volant.

A cet effet, l'invention a essentiellement pour objet une direction à assistance électrique pour véhicule automobile, avec un moteur électrique d'assistance apte à appliquer un couple ou une force sur la colonne de direction ou sur le pignon ou sur la crémaillère, dans cette direction assistée étant prévus des moyens de contrôle de l'intensité maximale du courant électrique parcourant le moteur d'assistance, en réponse à des signaux fournis par un capteur, de manière à réduire ou limiter cette intensité maximale lorsque la direction parvient en butée de braquage et à limiter ainsi l'échauffement du moteur électrique d'assistance, cette direction à assistance électrique étant caractérisée par le fait que les moyens de contrôle de l'intensité maximale du courant électrique parcourant le moteur électrique d'assistance sont constitués par un dispositif de contrôle électronique, en particulier un calculateur électronique, faisant diminuer l'intensité maximale de ce courant en fonction de l'angle de rotation du volant, ou grandeur équivalente, fournie par le capteur, et en tenant compte aussi de la dérivée de cet angle de rotation par rapport au temps, selon une courbe programmée.

Par exemple, le dispositif en cause fait décroître l'intensité maximale d'une façon continue, en fonction de l'angle de rotation du volant, ou grandeur équivalente, ceci au-delà d'un certain angle de rotation prédéterminé du volant, ou grandeur équivalente, et jusqu'à ce que soit atteinte la butée de braquage, pour laquelle l'intensité maximale possède une valeur réduite. La notion d'angle de rotation du volant est remplaçable par toute grandeur équivalente, c'est-à-dire liée à cette rotation, telle que : rotation du pignon, rotation du moteur électrique d'assistance lui-même, ou déplacement linéaire de la crémaillère de la direction assistée.

Ainsi, le système proposé consiste, à l'approche de la butée de braquage (à droite ou à gauche), à diminuer la valeur de l'intensité maximum du courant alimentant le moteur électrique d'assistance, en la multipliant par un certain facteur Ka inférieur à 1 ; on agit ainsi sur la cause même de l'échauffement de ce moteur, ce qui donne la certitude d'éviter son échauffement et de préserver efficacement ledit moteur. La diminution de l'intensité est « dosée » de manière à conserver une assistance suffisante à l'approche de la butée de braquage, et à éviter que la direction ne paraisse alors trop « dure » au conducteur du véhicule. A cet égard, le confort de conduite est aussi obtenu en programmant une diminution progressive de l'intensité du courant, à l'approche de la butée de braquage, de manière à éviter tout effet trop brutal.

De préférence, cette diminution de l'intensité maximale du courant, en fonction de l'angle de rotation du volant, est elle-même limitée par une adaptation du courant en fonction du temps, pour éviter de perdre trop vite l'assistance, en cas de rotation rapide du volant.

Avantageusement, le retour à une assistance normale, c'est-à-dire avec courant maximum, est commandé dès que le sens de rotation du volant est inversé pour revenir vers le point milieu, ce qui peut être obtenu par détection de l'angle de rotation du volant et de sa dérivée par rapport au temps, plus particulièrement par comparaison des signes (positif ou négatif) de cet angle de rotation et de sa dérivée, ou de toutes autres valeurs assimilables à ces grandeurs.

L'invention sera de toute façon mieux comprise à l'aide de la description qui suit, en référence au dessin schématique annexé représentant, à titre d'exemple, une forme d'exécution de cette direction assistée électrique :
Figure 1 est un schéma synoptique d'une direction assistée électrique de véhicule automobile, conforme à la présente invention ;
Figure 2 est un diagramme illustrant le fonctionnement de cette direction assistée électrique.

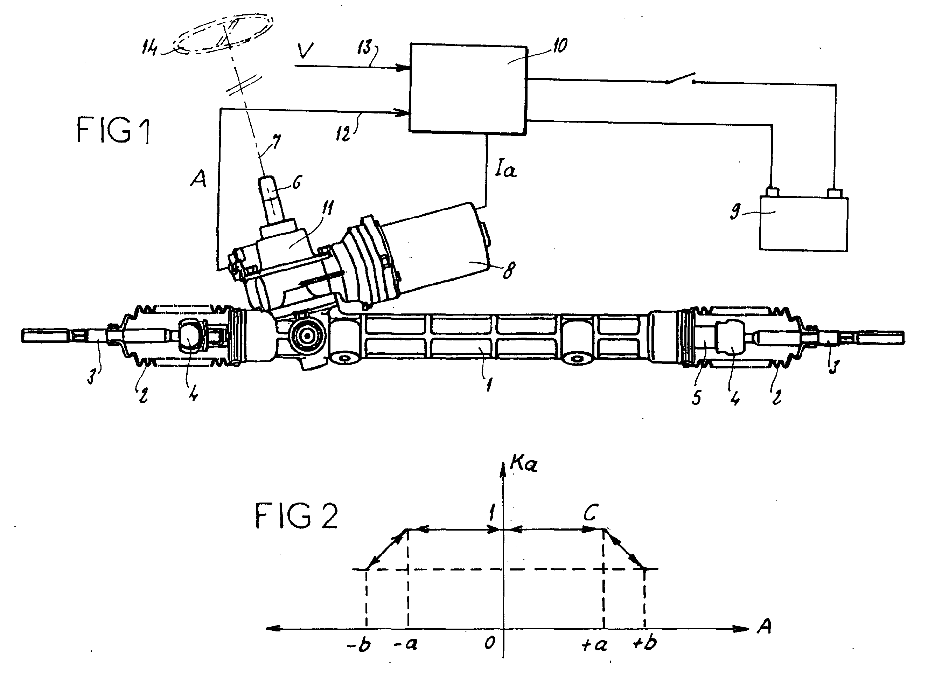

La figure 1 rappelle la structure générale d'une direction assistée électrique de véhicule automobile, dont elle montre le carter central tubulaire 1, les soufflets 2 et les deux biellettes de connexion 3, solidaires respectivement des boîtiers côté roue droit et gauche (non représentés). Les deux biellettes 3 sont liées, par des rotules 4, respectivement aux deux extrémités d'une crémaillère 5 montée coulissante longitudinalement dans le carter 1, la crémaillère 5 venant en prise avec un pignon dont l'arbre 6, sortant du carter 1, est lié en rotation à la colonne de direction, ici représentée symboliquement par son axe 7. Un moteur électrique 8 d'assistance est accouplé au pignon, le moteur 8 étant alimenté en courant électrique à partir de la batterie 9 du véhicule concerné, par l'intermédiaire d'un dispositif de contrôle électronique 10.

Un capteur 11 d'angle de rotation et de couple est ici placé sur le carter 1, au niveau de l'arbre 6 du pignon. Les signaux du capteur 11 sont transmis, par une liaison 12, au dispositif de contrôle 10, qui reçoit aussi par une autre liaison 13 un signal d'information de vitesse V.

Le dispositif de contrôle 10 régule l'intensité la du courant électrique qui alimente le moteur d'assistance 8. La loi de variation de l'intensité Imax de ce courant, en fonction de la valeur de l'angle de rotation A du volant 14 (fournie par le capteur 11), est illustrée par le diagramme de la figure 2, sur lequel la courbe caractéristique C représente la variation d'un coefficient Ka, qui est un coefficient pondérateur du courant d'assistance la, en fonction de l'angle A, le courant réellement injecté étant : la = Io x Ka. Le coefficient Ka est égal à 1 pour un angle de rotation A compris entre O° et (± a), puis ce coefficient Ka varie entre 1 et 0, jusqu'à l'angle (± b) correspondant à la butée de braquage. Autrement dit, à partir de la position neutre du volant 14, et de part et d'autre de cette position neutre, l'intensité Imax est constante et égale à sa valeur initiale Io, jusqu'à une valeur d'angle de rotation positive (+a) ou négative (-a), assez proche de l'angle de butée de braquage . Au-delà de la valeur ± a, l'intensité maximale Imax décroît assez rapidement, par exemple de façon linéaire, jusqu'à une valeur Ib, atteinte lorsque l'angle de rotation parvient lui-même à sa valeur de butée (+b), pour la butée de braquage à droite, ou sa valeur de butée (-b), pour la butée de braquage à gauche.

Le coefficient Ka est également pondéré, en fonction du temps, pour limiter la perte d'assistance dans le temps, de manière à éviter une perte trop brusque de l'assistance en cas de rotation trop rapide du volant 14 à l'approche de la butée de braquage.

Enfin, la valeur de ce coefficient Ka est directement ramenée à 1, dès que le signe de l'angle de rotation A du moteur et le signe de sa vitesse angulaire sont opposés, ce qui indique un début de retour du volant 14 vers le point milieu de la direction. De toute façon, cette stratégie de limitation de l'intensité maximale du courant électrique dans le moteur d'assistance 8 est interrompue, dès que l'angle de rotation A du volant 14 repasse en dessous de la valeur (+a) ou (-a), selon le sens de braquage.

Ainsi, à l'approche de la butée de braquage, l'intensité maximale Imax du courant électrique parcourant le moteur d'assistance 8 est réduite dans une proportion appréciable, de sorte que le risque d'échauffement de ce moteur 8 est supprimé, et sans qu'il en résulte d'autres inconvénients ou désagréments.

Le dispositif de contrôle 10 est avantageusement un calculateur électronique qui, en fonction des signaux d'entrée reçus notamment du capteur 11, fait diminuer l'intensité Imax en fonction de l'angle de rotation A du volant 14 selon une courbe C programmée. Au-delà de sa partie décroissante, cette courbe C peut encore présenter un palier, à l'approche de la valeur de butée ± b de cet angle.

Lorsque l'angle de rotation A du volant 14 diminue de nouveau, à partir de la valeur de butée, pour se rapprocher de la position neutre, l'intensité Imax augmente selon la même courbe C, parcourue en sens inverse, de sorte que l'assistance est "récupérée", le retour à la pleine assistance étant obtenu en deçà de la valeur d'angle a.

L'on ne s'éloignerait pas du cadre de l'invention, telle que définie dans les revendications annexées, en modifiant la loi de variation de l'intensité Imax en fonction de l'angle de rotation A, par exemple en prévoyant une courbe C à plusieurs pentes, ou en destinant le même système à une direction assistée avec un moteur électrique ou un capteur d'angle de rotation placés différemment, par exemple sur la colonne de direction, sur le pignon, sur la crémaillère ou en un autre endroit, et fournissant toujours une grandeur équivalente à l'angle de rotation du volant.

## Revendications

1. Direction à assistance électrique pour véhicule automobile, avec un moteur électrique d'assistance (8) apte à appliquer un couple ou une force sur la colonne de direction (7) ou sur le pignon (6) ou sur la crémaillère (5), et dans laquelle sont prévus des moyens de contrôle (10) de l'intensité maximale (Imax) du courant électrique (Ia) parcourant le moteur d'assistance (8), en réponse à des signaux fournis par un capteur (11), de manière à réduire ou limiter cette intensité maximale (Imax) lorsque la direction parvient en butée de braquage, et à limiter ainsi l'échauffement du moteur électrique d'assistance (8), **caractérisée en ce que** les moyens de contrôle de l'intensité maximale (Imax) du courant électrique liai parcourant le moteur électrique d'assistance (8) sont constitués par un dispositif de contrôle électronique (10), en particulier un calculateur électronique, faisant diminuer l'intensité maximale (Imax) de ce courant en fonction de l'angle de rotation (A) du volant (14), ou grandeur équivalente fournie par le capteur (11), et en tenant compte aussi de la dérivée de cet angle de rotation (A) par rapport au temps, selon une courbe programmée (C).

2. Direction assistée électrique selon la revendication 1, **caractérisée en ce que** le dispositif de contrôle électronique (10) fait décroître l'intensité maximale (Imax), d'une façon continue, en fonction de l'angle de rotation (A) du volant (14), ou grandeur équivalente, ceci au-delà d'un certain angle de rotation prédéterminé (± a) du volant (14), ou grandeur équivalente, et jusqu'à ce que soit atteinte la butée de braquage (± b), pour laquelle l'intensité maximale possède une valeur réduite (Ib).

3. Direction assistée électrique selon la revendication 1 ou 2, **caractérisée en ce que** la diminution de l'intensité maximale (Imax) du courant, en fonction de l'angle de rotation (A) du volant (14), est elle-même limitée par une adaptation du courant (Ia) en fonction du temps, pour éviter de perdre trop vite l'assistance, en cas de rotation rapide du volant (14).

4. Direction assistée électrique selon l'une quelconque des revendications 1 à 3, **caractérisée en ce que** le retour à un courant (Ia) maximum est commandé dès que le sens de rotation du volant (14) est inversé pour revenir vers le point milieu, par détection de l'angle de rotation (A) du volant (14) et de sa dérivée par rapport au temps, plus particulièrement par comparaison de signes de cet angle de rotation (A) et de sa dérivée.
